# EUROPEAN PATENT APPLICATION

(11) **EP 4 654 032 A1**
(43) Date of publication of application: **26.11.2025**
(21) Application number: 24177747.3
(22) Date of filing: 23.05.2024
(51) Int. Cl.: G06F 13/16, G06F 13/32, G06F 13/40, G06F 13/42, G06F 13/10

(54) **CONCEPT TO CUSTOMIZE PCIE COMMUNICATION FOR AUTOMOTIVE E/E SYSTEMS**

(71) Applicant: CARIAD SE, 38440 Wolfsburg (DE)
(72) Inventor: Zhang, Licong, 38440 Wolfsburg (DE); Herr, Stefan, 38440 Wolfsburg (DE); Durai, Krishnaswamy, Bengaluru (IN)
(74) Representative: Bals & Vogel Patentanwälte PartGmbB

(57) **Abstract**

The invention is related to a system (S) for a high-bandwidth interconnect (PCIe), especially a Peripheral-Component-Interconnect-Express-Communication, in a vehicle (101), the vehicle has an in-vehicle central computing platform (100) comprising a plurality of computing platforms (HPC), optionally high performance computing platform and/or integration computing platform, for different functional applications (APP) using a shared memory interface (SHM-API), especially a shared memory application programming interface, the system (S) comprising a modular software architecture (SA) with different abstraction layers (L1, L2, L3), especially being applicable to heterogeneous vehicle equipment with variable computing platforms (ECU) and/or different functional applications (APP), wherein the system (S) is configured to fulfill automotive requirements (a, b, c, d, e) with regard to:
(a) data consistency during read and write processes during data transfer,
(b) safe operation of the vehicle by guaranteeing the communication bandwidth to safety-related and/or time-critical functional applications (APP),
(c) synchronization between the functional applications (APP) regarding the data transfer,
(d) safe communication by providing organized and/or correct data transfer between the safety-related functional applications (APP), and/or
(e) flexible and efficient communication by providing non-blocking and/or asynchronous data transfer to the functional applications (APP).

## Description

The invention is related to a system for a high-bandwidth interconnect, especially a Peripheral-Component-Interconnect-Express-Communication, in an in-vehicle central computing platform as part of a vehicle, comprising a plurality of computing platforms for different functional applications using a shared memory interface, e.g. a shared memory application programming interface. Further, the invention is related to a corresponding vehicle comprising a respective system.

Automotive bus systems like CAN/CAN-FD, LIN and FlexRay are typically used in the sensor / actuator layer and not suited for the communication between high performance computing platforms due to their limited bandwidth and static configuration. Ethernet is commonly used for the backbone communication between the high-performance computing platforms. Automotive application of Ethernet uses standard Ethernet protocols including IP, TCP/UDP, but also have automotive specific protocols like SOME/IP. The binding to the application software uses typically the AUTOSAR RTE in Classic AUTOSAR environment, ara::com in the Adaptive AUTOSAR environment or similar implementations. The usage of PCIe ("Peripheral Component Interconnect Express") in other domains is mainly based on the PCIe standard and can have domain specific adaptations or implementation on top of the standard protocol. There has been some initial work in the automotive domain to try to apply PCIe technologies. However, a scalable solution based on PCIe switch for high performance computing platforms with a layered and modular software stack that can be applied to heterogeneous computing platforms has not yet been applied in the automotive domain. In addition, there have not been any solutions of tailoring the usage of PCIe technology to fulfill requirements on communication specific to automotive use cases.

The task of the invention is to overcome at least one of the disadvantages mentioned above. Especially, the aim of the present invention is to provide a system for a high-bandwidth interconnect, especially a Peripheral-Component-Interconnect-Express-Communication, in an in-vehicle central computing platform (as the central computational capacity within a vehicle), comprising a plurality of computing platforms for different functional applications using a shared memory interface, e.g. a shared memory application programming interface, being applicable to heterogeneous vehicle equipment with variable computing platforms and/or different functional applications. Further, the aim of the present invention is to provide a corresponding vehicle comprising a respective system.

According to the first aspect, a system for a high-bandwidth interconnect is provided with the features of the independent system claim. According to the second aspect, a corresponding vehicle comprising a respective system is provided with the features of the independent device claim. Details and features disclosed on individual aspects of the invention also apply to the other aspects of the invention and vice versa.

According to the first aspect, it is provided:
A system for a high-bandwidth interconnect (interconnect may be understand as communication), especially a Peripheral-Component-Interconnect-Express-Communication, in an in-vehicle central computing platform as part of a vehicle,
the in-vehicle central computing platform comprising a plurality of computing platforms for different functional applications using a shared memory interface, especially a shared memory application programming interface,
the system comprising a modular software architecture with different abstraction layers, especially being applicable to heterogeneous vehicle equipment with variable computing platforms and/or different functional applications.

According to the invention, the system is configured to fulfill automotive requirements with regard to:
(a) data consistency during read and write processes during data transfer,
(b) safe operation of the vehicle by guaranteeing the communication bandwidth to safety-related and/or time-critical functional applications (APP),
(c) synchronization between the functional applications (APP) regarding the data transfer,
(d) safe communication by providing organized and/or correct data transfer between the safety-related functional applications (APP), and/or
(e) flexible and efficient communication by providing non-blocking and/or asynchronous data transfer to the functional applications (APP).

A high-bandwidth interconnect, like a Peripheral-Component-Interconnect-Express-Communication or PCIe for short, can be used as communication technology in the more recent centralized E/E architecture comprising multiple (high performance) computing platforms. In this case, multiple (high performance) computing platforms may be integrated in corresponding physical casings, providing the possibility of connecting these high-performance computers through a central PCIe switch, preferably without physical cables. In such a system S, each (high performance) computing platform can have one or more microprocessors as communication nodes in a PCIe network. These microprocessors of each high-performance computing platform may have a PCIe software stack and be configured as a root complex. The PCIe switch may enable the communication between the nodes using address mapping and translation.

Towards the applications, a shared-memory like API can be provided and Direct Memory Access (DMA) mechanism and/or Programmed Input/Output (PIO) transfer types may be offered.

Automotive requirements and additional features will be described in the following.

The usage of (e. g. bare-metal) shared memory, like communication based on PCIe technology, serves as the foundation of applying the PCIe in the automotive domain. However, automotive domain has certain domain specific requirements for communication and additional mechanisms needs to be added to address these requirements. These mechanisms must on one hand fulfill the automotive requirements. On the other hand, they must be designed according to the characteristics of the PCIe technology.

In general, the following requirements may be addressed by the proposed system:
(related to a) Data consistency (read/write protection): to enable or even to guarantee data consistency during read/write processes. That is to enable or even to guarantee that the read and write does not happen simultaneously to corrupt the data consistency.
(related to b) Quality-of-Service (QoS) and performance: to provide mechanisms to offer Quality-of-Service and optimize performance. Firstly, traffics (that is data transfers) may be prioritized and more important traffics may get access to the bandwidth first. Secondly, the maximal block size may be introduced to limit the time of a single payload. Addition, a sliding window based bandwidth limitation may be introduced to prevent an application to monopolize the bandwidth (either through fault or unsound design) and starve the other traffics.
(related to c) Notification to receivers: to make it possible so that the receiver can get notified, when a data transfer happens and able to handle the interrupt. Due to performance reasons, the application may be configured to handle the interrupt in different possibilities. A sequence counter (SQC) can also be used as an mechanism for status update without interrupt.
(related to d) An end-to-end (E2E) mechanism.
(related to e) Buffering mechanisms: to store transferred data into containers like a circular buffer or a FIFO queue so that the receiver may have the opportunity to access older data and does not always have to process the incoming data right away, especially if no data lost/override is tolerated. In addition, the buffering mechanisms may also provide the blocking free data transfer, if the size of the buffer is sufficient.

Data consistency may be achieved by mechanisms as described in the following:
To guarantee the data consistency and protect the read/write operations, a state machine for each data transfer based on memory segments may be provided. In this case, both transfer types Direct Memory Access (DMA) mechanism and/or Programmed Input/Output (PIO) may be used.

PIO transfer: In the case of PIO transfer, only a physical memory segment is allocated on the receiver side. The senders side has a remote memory segment, which is a virtual memory address referring to the physical memory segment on the receiver side. When the sender writes, it uses the PCIe protocol to directly write into the physical memory segment on the receiver side. The receiver then reads from the same physical memory segment to get the data.

DMA transfer: In the case of DMA transfer, a physical memory segment is allocated on the sender side to store the data locally, where the sender application can write the data into. Another physical memory segment is allocated on the receiver side to store the data, where the receiver application can read data from. The sender application can then trigger a DMA transfer using the DMA engine on the PCIe switch to transfer data from the memory segment on the sender side to the receiver side.

Therefore, in order to enable the data consistency a state machine is provided to protect data on the memory segments during read and write processes in parallel or simultaneously. It is possible to use Direct Memory Access mechanism and/or Programmed Input/Output mechanism for the data transfer. Preferably for each memory segment used for the data transfer a state machine may be provided.

The uniform state machine may reduce the complexity by differentiating between the PIO and DMA. For the DMA, transfer, a more flexibly state machine may be applied. However, in order to reduce the complexity and offer the easier usage, a uniform state machine may be used for both PIO and DMA.

In order to realize / to implement the state machine, for each memory segment used for the data transfer following logical states may be provided:
- Unconnected,
- ReadyForWrite,
- ReadyForRead,
- BlockedForWrite, especially incl. substate WritelnProgress,
- BlockedForRead, especially incl. substate ReadInProgress,
- BlockedForSync, especially for Direct Memory Access, and/or
- SyncInProgress, especially for Direct Memory Access.

Preferably, a state machine may be provided for a sender state and a receiver state separately. In order to be able to implement the state machine, additionally, a sender state (SS) and a receiver state (RS) may be defined, which may take one of the defined of the logical states. The state machine for the sender state (SS) may be updated by the sender side exclusively. The state machine for the receiver state (RS) may be updated by the receiver side exclusively.

Safe operation of the vehicle may be achieved by mechanisms as described in the following:
The data transfer through PCIe switch may be constrained by the following facts:
- The data transfer between different root complexes may be done by the DMA engine of the PCIe switch.
- Each PCIe switch may have a limited number of DMA channels available, which need to be shared between all the root complexes and end points.

To ensure the quality-of-service (QoS) of the communication, following requirements may be considered:
- Data transfer with time criticality may be prioritized against other non-time critical ones.
- It shall be prevented that a single data transfer or an application may monopolize the bandwidth and therefore starve the other traffics. This may be especially important, when dynamic transfer of the data is spontaneously triggered from the applications and not cyclically triggered by the PCIe software stack.

Towards these requirements, preferable mechanisms may be added, such as limitation of the block size, sliding window limitation and prioritization of data traffic.

It is possible, that to enable the safe operation of the vehicle a prioritization of data transfer may be provided in order to enable safety-related and/or time-critical functional applications to be prioritized against other applications.

Prioritization of data traffic may be achieved as described in the following:
To implement the prioritization, each data transfer may be assigned a traffic priority. There may be two locations, where this priority is checked. Firstly, inside the PCIe stack of a node, e. g. triggered DMAs are placed into multiple queues according to the priority. The PCIe stack may empty the queues according to the priority and register the DMA transfer request to the PCIe switch. Secondly, the PCIe switch may go through the registered DMA transfer requests from different nodes and first serve the ones with the highest priority.

It is possible, that to enable the safe operation of the vehicle a limitation of block sizes for data amount of one payload may be provided.

Limitation of block size may be achieved as described in the following:
Since a DMA transfer is not preemptable, i.e., when a DMA transfer has started, it needs to be finished before the DMA engine is free to serve other data transfers, even those with higher priorities. Therefore, it may happen that the DMA transfer with higher priority is still delayed by the time of a DMA transfer. Although the PCIe has a much larger bandwidth compared to other communication technologies, it may also serve the transfer of a much larger data (block size) in one DMA transfer. Therefore, in order to limit the size of a single DMA transfer, a limitation of a block size may be introduced. The transfer time also depends on the link speed of the PCIe links, which can different inside the route of a single DMA transfer. Therefore, the block size limit may be calculated according to the links with the lowest speed in the route. The block size limitation may be particularly useful for scenarios, where data streams only tolerate low latency and cannot be delayed by other traffics for too long.

It is possible, that to enable the safe operation of the vehicle a sliding window limitation for accumulated data amount for the DMA transfer is provided,

Sliding window limitation may be achieved as described in the following:
The prioritization and limitation of block size may ensure that the data transfer may be categorized and prioritized and higher priority traffic may always first get a channel. It may however, not prevent the application to monopolize the bandwidth and thus starving the other traffics, especially for the higher priority traffics. Since triggering of the transfer is left to the application, the application may then decide, when and in which frequency the data transfer will be triggered. A possible cause for the monopolization may be two folds. Firstly, it may be due to an unreasonable design, that the application triggers DMA transfer of large data more frequently than actually needed and too frequent to increase the system last and negatively influence other traffics. Secondly, a fault may occur that turns the application into a babbling idiot and triggers DMA transfer of large data all the time.

To prevent this from happening, a sliding window limitation may be preferable. For each data transfer, two parameters may be configured, a time window and an accumulated size of data that is allowed to be transferred. Each time, an application triggers a DMA transfer, the start and the end of the time window and the accumulated data sent within this window may be calculated. If the limit is not reached, the DMA may be triggered/queued for trigger. If the limit has been reached, then the transfer needs to be prevented. The handling of this prevention may have multiple options depending on actual requirements of the application. One possible option may be, the transfer may be rejected and the application may get an error code back, e. g. together with the next available time, when the DMA can be triggered.

This mechanism may further be applied to the doorbell interrupts, which may be sent from one node to another. The number of instances of the doorbell triggered may be accumulated inside a sliding window and when the limit has reached, no further doorbells instances may be triggered within the sliding window. A further advantage of the sliding window limitation may be that in the worst-case load of the specific data transfer may be calculated offline and therefore firstly may be used for the communication design and secondly may be documented for the system integration. This limitation to prevent the worst case may be important in the automotive E/E systems.

Notification to the receivers may be provided as a further mechanism to achieve the synchronization between the functional applications regarding the data transfer.

Further, in order to enable the synchronization a doorbell mechanism may be provided to enable a doorbell and/or interrupt action.

Unlike conventional bus system, like Ethernet and CAN, where the software can be configured that the reception of each individual packet can generate an interrupt, the PCIe based data transfer does not necessarily generate an interrupt, when the transfer is done. That may be also an advantage, since it may reduce interrupt load, when it is not necessary.

However, in certain cases, a notification (both in a synchronous and asynchronous fashion) may be needed on the receiver side. For this, the following options may be included:
- Sequence counter, and/or
- Doorbell event (either for polling or direct callback function).

In the case of sequence counter, a running counter may be added to a payload of a data transfer and on the receiver side, no interrupt should be generated, when the data transfer has completed and the receiver may then judge the update status of the data by reading the sequence counter asynchronously. This option may provide reduced processing load.

A doorbell mechanism may be implemented based on MSI interrupts. The sender may ring a door bell by triggering an event and this event may generate an interrupt on the receiver side. For this mechanism, further two sub-options may be possible. In the first case, in the generated interrupt, only the doorbell semantics may be saved and no further actions follow. The application may either get the list of doorbells through cyclic polling or asynchronous read. In the second case, a user defined callback function may be coupled to the doorbell so that when the doorbell event is triggered, a callback function on the receiver side may be triggered, which may contain the user specific data for further processing.

Following profiles may be provided:
To enable the synchronization between the functional applications for data transfer (related to c) and/or safe communication (related to d), a sequence counter and/or an end-to-end mechanism may be provided, wherein e. g. the end-to-end mechanism may contain a sequence counter and a cyclic redundancy check and optionally a data ID.

Thus, profiles, e. g. a number of bytes added to the payload, which is related to or calculated based on the payload, may be used. Two options may be offered, one is a sequence counter (SQC) and second is an end-to-end (E2E) profile, which may contain a sequence counter (SQC) and a cyclic redundancy check (CRC).

The sequence counter (SQC) may be a running counter, which may be incremented on the sender side, e. g. when a new data transfer has happened. This may be checked on the receiver side for the following purposes:
- Indicate an update of the data, and/or
- Protect against the loss, insertion and in correct ordering of data.

The end-to-end (E2E) profile may further contain a cyclic redundancy check (CRC) and the possibility of involving a data ID, which may respectively protect against corruption of data and incorrect addressing of data. The end-to-end (E2E) profile may be used to guarantee safe communication by providing organized and/or correct data transfer between the safety-related functional applications (APP). In the case of communication faults, the end-to-end profile and the corresponding mechanism is able to detect these faults and indicate them to the functional applications (APP).

Furthermore, it is possible, that in order to enable the flexible and efficient communication by providing non-blocking and/or asynchronous data transfer to the functional applications (APP), a buffering mechanism may be provided in order to enable reading and/or writing during block states of a sender state and/or a receiver state.

Buffering mechanisms may be achieved as described in the following:
A buffering mechanism or container may be introduced to enable the possibility of using a circular buffer or a FIFO queue, e. g. containing multiple elements/chunks, wherein especially each element/chunk may represent an instance of data transfer. This buffering mechanism may address following use cases and requirements:
Data cannot be processed by the receiver immediately after data transfer. This can be due to the processing jitter on the receive side, e.g. from scheduling, so that in order not to lose any data, a container of a specific size as circular buffer or FIFO queue may be implemented to store the data. The sender may then write into the container and the receiver may read out the data from the container. Depending on the size of the container, this may largely decouple the timing of the processing on the receiver side from the timing of data transfer on the sender side.

Application needs several instances of the data. In this case, the application may still get access to data of previous instances.

Block-free data transfer is needed. To guarantee the data consistency during the remote read/write operations, a segment state machine may be implemented. When the state machine blocks the segment for reading, then it is not possible to write into it. With the introduction of the container mechanism, the segment state machine only applies to each individual element (called as a chunk) of the container. When a chunk is currently blocked for reading, the sender may still write into the next chunk. In the case that the number of chunks in the container is sufficiently large, the block-free data transfer may be achieved, even when data consistency is guaranteed.

Preferably, in order to implement a state machine and/or a buffering mechanism, a synchronization memory segment and control mechanism may be provided.

Synchronization memory segment and control mechanism may be achieved as described in the following.

In order to implement the segment state machine and the buffering mechanisms, an additional concept may be introduced, which is the synchronization memory segment. The synchronization memory segment, similar to the memory segments, may be used to transfer actual payload data, may be a part of memory, that may be accessed both from the sender and receiver side. The synchronization memory segment may use the PIO transfer type. The sender may update remotely and the receiver may update locally inside the synchronization memory segment. The synchronization memory segment may contain a specific data structure that implements both the segment state machine and the pointers for the chunk management for the buffering/container mechanisms.

Preferably, it may be provided, that for different types of data appropriate requirements are defined to be fulfilled.

Data transfer types and feature configurations will be described in the following.

All the additional features described in this may be freely combined to tailor communication for individual use cases.

However, the following data transfer types (Type 1 to Type 4) may be defined to group the features together for typical automotive communication use cases.

### Type 1:

Type 1 transfer is a simple "Vanilla" transfer which does not contain any mandatory features. Optionally an SQC may be attached to the payload data to indicate an update of the data to the receivers. The type 1 transfer has the minimal overhead and meanwhile does not offer any protection or additional features. These type of transfer are suited for data transfer, which are unimportant (compared to other data), infrequent and small data, typically data in the non-safety critical functional domains.

### Type 2:

Type 2 transfer is a transfer guaranteeing the consistency of the data transfer. In order to do that, the SQC and segment state machine is mandatory. The SQC provides low overhead indications to the receiving applications regarding the update of the data and protect against the loss and incorrect ordering of the data transfer instances. The segment state machine ensures the data consistency during the read/write operations. The type 2 transfer requires extra synchronization memory segments to guarantee data consistency, a trailer part to hold the SQC and the function to maintain and check the SQC. It is targeted at data that are important from a functional point of view (but not safety-critical), needs to be transferred frequently and the data amount to be transferred is comparatively larger. The receiver applications periodical pipelines to process the data, without any particular applicational logic having to actively wait for the data. Typical examples are, e.g., transfer of sensor data (e.g., camera raw images) used in non-safety critical functions or the gathering of data for backend usages.

### Type 3

Type 3 transfer, compared to the type 2 transfer has additional feature of interrupt. That is, whenever data has been received, the application gets an interrupt from the communication stack, in order to carry out a functional logic that depends on the data. The type 3 transfer requires the interrupt to the applications (which also require additional CPU load and context switches) compared to the type 3 transfer. It is targeted at use cases which are similar to the type 2 transfer, but additionally requires the in-time processing of the data. This transfer type shall be used only when needed, in order to reduce the overall performance load.

### Type 4

Type 4 transfer is a transfer targeted at safety-critical data, i.e., data which are used for ASIL relevant function chains. It requires an E2E profile, which contains the SQC, DatalD and CRC functionality, thus protecting the data transfer against the repetition of data, loss of data, insertion of data, incorrect addressing of data, incorrect sequence of data, corruption of data, fulfilling the automotive requirements for ASIL compliant data transfer.

The type 4 transfer requires an additional trailer part of the payload to hold the E2E profile and the functionality to calculate and check the E2E profile. The calculation of CRC on large data (where currently only PCIe technology is suited for transmission) may require computational resources. The type 4 transfer does not require a mandatory configuration of the interrupt, but this may be added if required.

It is targeted at safety critical data, especially the data which are involved in the function chains of vehicle control (e.g., braking and steering), communication of ADAS internal communication (e.g., distribution of sensor data or environment models) which are used in ASIL relevant function chains.

Use case based customizations may be as described in the following.

The definition of the data transfer types (1 - 4) cover the most significant data transfer use cases in the automotive domain and may serve as development example to configure the data communication using PCIe. This is not a strict restriction of the combination of features and it is free to build customized combinations of the features that is most suited for desired use cases.

The modular/layered software architecture (which also may be called a software stack) may be divided into the following layers:
The system comprising:
- a first abstraction layer for the high-bandwidth interconnect for an operation system of the microprocessors (uP) of the computing platforms (HPC).

OS / Base Layer (L1): The OS ("Operating System") and base layer may contain the PCIe controller drivers in the BSP provided by the SoC ("System On Chip") vendor and the PCIe OS drivers provided by the OS vendor. These drivers provide the basic PCIe functionality according to the PCIe standards and the enumeration of the devices.

The system comprising:
- a second abstraction layer for managing the high-bandwidth interconnect.

PCIe Stack Drivers (L2): These drivers may contain the drivers from the PCIe switch vendor for functionalities like DMA and NTB ("Non Transparent Bridge"). The PCIe switch drivers may provide the functionality of interfacing with the PCIe switch incl. e.g., the DMA engine control, the address mapping for the address translation and the status exchange between the node and switch and other nodes. These drivers also may contain the drivers to allocate and configure the physical memories used for communication.

The system comprising:
- a third abstraction layer for the shared memory interface for the different functional applications, especially to gain access to the shared memory, preferably provided by the plurality of computing platforms (HPC).

Abstraction and APIs (L3): This layer may contain runtime daemon for segment and resource management (applications may thus directly write into and read from physical segments and not through the runtime daemon). It may also contain necessary libraries and the APIs towards the applications.

This invention proposes the system and concept to apply PCIe communication as a high-bandwidth interconnect solution based on PCIe switches for data communication between (especially high performance) computing platforms in the automotive domain (e. g. for in-vehicle communication). Proposed modular software solution may be preferably applied to heterogeneous computing platforms using shared memory like API ("Application Programming Interface"), including corresponding mechanisms, software architecture and the interfaces.

The proposed system enables a generic automotive application to use PCIe communication using shared memory like communication paradigm by abstracting the PCIe specific details. This may be achieved by using a software stack with modular/layered software architecture and providing a shared memory like API towards the applications.

The proposed system is not focusing on a particular scenario or function within the vehicle and does not require PCIe specific implementation in the applications. Rather, the proposed system enables the technology to be rolled out on a generic automotive application for different functional domains.

Preferably, the proposed system abstracts the PCIe related details from the applications. Application developers do not need to concern with the PCIe details. The details are addressed by a configurable PCIe software stack (i.e. by the stack functionalities and its configurations).

Advantageously, the proposed system may provide simple and clear shared memory-based communication paradigm based on the DMA ("Direct Memory Access") and/or PIO ("Programmed Input/Output") mechanism.

Advantageously, the proposed system may abstract the details of the HW ("Hardware") / OS ("Operational System") / SW ("Software") framework of the microprocessors of the computing platforms and PCIe switches.

Additionally, utilizing the concept for abstraction, applications may be abstracted from the fact that memory is shared between applications either via local shared memory (i.e. RAM accessible by the CPU of one compute note) or remotely via PCIe. The proposed system may automatically choose (either through static configuration or dynamic decision) according to an addressing scheme (specifying communication relationship and the deployment of the applications) one of the following transfer method:
o Local shared memory segment or equivalent mechanisms (including signaling of data availability for read or write via semaphore as doorbell replacement).
∘ Memory segment on source compute node mirrored to memory segment on target compute node(s) (including doorbell signaling) through DMA via either.
   □ PCIe switch direct DMA for RC-RC connections (incl. scatter/gather DMA when possible).
   □ PCIe switch multicast DMA.
   □ Compute node DMA for RC-EP connections (incl. scatter/gather DMA when possible).
∘ Memory segment read or written through PIO mechanism (including doorbell signaling).
∘ Transfer of data via alternative Ethernet connection, whereby the "shared memory" characteristics is emulated on top of the IP protocol stack, i.e. keeping the "shared memory" abstraction towards the application.

Dividing the software into different layers enables the abstraction of the specifics of the HW ("Hardware"), OS and PCIe switch, so that the stack can be used for an uniform solution for different HW, OS (e.g., Linux or QNX) as well as the PCIe switch. Towards the applications the same API is used. This enables efficient and compatible communication between the high-performance computing platforms (such as computing platforms (HPC)) customized to different automotive functional domains.

With the help of the proposed system a plurality of advantages may be achieved.
(a) The proposed system may use a PCIe switch for the PCIe communication, making the solution scalable to multiple (high performance) computing platforms.
(b) The proposed system provides a modular software architecture for the PCIe stack on the (high performance) computing platforms which applies to heterogeneous (HW and OS) computing platforms.
(c) The proposed system provides higher level protocols and APIs enabling automotive applications to use the remote shared memory communication.

PCIe communication and application in distributed automotive E/E systems may comprise:
A centralized (high performance) platform architecture, which may be implemented as described in the following:
An in-vehicle central computing platform as part of a vehicle, comprising a plurality of computing platforms (HPC), may be integrated in a common casing, especially comprising a power supply and a cooling system. Such an architecture enables the usages of PCIe as communication technology since the (high performance) computing platforms (HPC) may be connected with the PCIe switch, especially without a cable connection.

Furthermore, each of the plurality of computing platforms (HPC) may comprise at least one or more microcontroller and/or microprocessor systems to host one or more functional applications, especially:
- advanced driver assistance systems,
- infotainment functions,
- driving and charging functions,
- connectivity functions, etc.

The whole system comprises multiple (high performance) computing platforms, each of which may comprise multiple microcontroller and microprocessor systems. Each of these (high performance) computing platforms may be used to host software functions of specific domains, like ADAS ("Advanced Driver Assistance Systems"), Infotainment, driving and charging functions, connectivity, etc.

Moreover, each of the plurality of computing platforms may comprise a software stack/layer for the high-bandwidth interconnect, which is deployed on one or more microprocessors (uP) of the computing platform. The PCIe communication may be primarily targeted at the communication between the computing platforms.

Further, a Peripheral-Component-Interconnect-Express-switch may be provided for the high-bandwidth interconnect, especially comprising a firmware with a switch configuration.

Furthermore, a remote management host, preferably in the form of a microcontroller, may be provided, especially comprising a firmware to run management tasks for a Peripheral-Component-lnterconnect-Express-switch.

Each of the plurality of computing platforms may be connected to a Peripheral-Component-Interconnect-Express-switch using a Peripheral-Component-Interconnect-Express-link, especially comprising one or more Peripheral-Component-Interconnect-Express-lanes, preferably 1, 2, 4 etc. A number couple of PCIe lanes (e.g., by 1, 2, 4), which may be chosen depending on the bandwidth need.

Preferably, the high-bandwidth interconnect may be configured to be used parallel to an Ethernet based communication in the vehicle, especially to serve for such functional applications which require increased bandwidth, reduced latency and/or hardware-based data transfer with reduced interrupt and processing load. The PCIe communication does not need to replace the Ethernet-based backbone communication. It may be parallel to the Ethernet communication to serve for specific use cases requiring large bandwidth, low latency and/or hardware based data transfer with reduced interrupt and processing load.

Potential target use cases may be provided as described in the following:
Potential use cases for the PCIe communication may be divided into the following categories:
- Data transfer with increased/large bandwidth:

Typical examples of this use case may be transfer of raw sensor data, e.g. camera images, from one (high performance) computing platform to another, optionally also in a multicast fashion. The bandwidth requirement for each individual use case may easily go up to two-digit Gbit/s range and would be too much for Ethernet connection both from the communication bandwidth and processing load point of view. The DMA based transfer using PCIe may solve this problem both from the bandwidth (due to much larger bandwidth) and the processing load (due to HW based data transfer) point of view.
- Data transfer with reduced/low latency:

PCIe based communication may also enable data transfer that requires low latencies. Due to a large bandwidth and a mature and efficient implementation of the PCIe technology in the lower layer (TLP), the data transfer with PCIe offers also very low latency.
- Data transfer with reduction of interrupt loads:

PCIe may also provide data transfer with reduced interrupt loads. The DMA transfer using hardware can reduce the number of interrupts generated in the software for the processing of data packets to only those necessary. Therefore, it may also be suited for providing the general availability of data to (high performance) computing platforms (e.g., signals from sensor/actuator layers).

PCIe communication and application in distributed automotive E/E systems may comprise:
A RC-to-RC communication architecture through a PCIe switch, which may be implemented as described in the following:
Preferably, the plurality of computing platforms may be configured to build an RC-to-RC-Node-Architecture for the high-bandwidth interconnect. Advantageously, each of the plurality of computing platforms may have microprocessors (uP) configured as a root complex node within a RC-to-RC-Architecture of the high-bandwidth interconnect. Further, each of the plurality of computing platforms may comprise a corresponding address domain within a RC-to-RC-Architecture of the high-bandwidth interconnect.

Generally, a PCIe node may be configured as a Root Complex node or an End Point node. In the proposed system, each of the (high performance) computing platform may be preferably configured as RC ("Root Complex") node, e. g. having its own memory address domain, which may be partitioned and isolated. The PCIe switch maps and translates between the different memory address domains thus enabling the communication between different root complexes. The RC-to-RC-Architecture may be advantageous since in this case each (high performance) computing platform may have its own memory address domain. Therefore, a system fault on one node might not lead to the unavailability of the whole system, as compared to a RC-EP system. The abstraction concept in the proposed system may also be applied to an EP node without changes in the API towards the application.

Data transfer using PIO and DMA may be chosen, e.g. as disclosed in the following:
It may be advantageous, if data transfer between the plurality of computing platforms is provided using Direct Memory Access mechanism and/or Programmed Input/Output mechanism.

The PCIe communication offers two types of transfer mechanisms.

One is the Direct Memory Access (or shortly DMA) based data transfer, where the DMA engine from the PCIe switch or the (high performance) computing platforms is used to transfer the data from the sender to the receiver and the CPU of the sender and receiver is only used for writing and reading data from its local memory.

The second one is Programmable Input/Output (or shortly PIO) based data transfer, where the CPU of the (high performance) computing platforms are directly involved in the data transfer.

In the proposed system, both mechanisms may be used for the data transfer between the (high performance) computing platforms. The DMA can be used for the transfer of large bandwidth data, like raw sensor data, from the ADAS sensors or the generate providing of the data where interrupt and processing load is minimized.

The PIO may be used for use cases requiring low latency data transfer of smaller (but maybe important) data, like the synchronous exchange of the status information between two (high performance) computing platforms.

Additionally, it is also possible to trigger a doorbell event from one (high performance) computing platform.

Shared memory communication may be provided as described in the following:
The PCIe technology is intrinsically suited for shared memory communication.

The high-bandwidth interconnect may be provided by one or more microprocessors (uP) of each of the plurality of computing platforms being configured to allocate a memory space in a space, e. g. locally on microprocessors (uP) of the computing platforms and/or remotely on the microprocessors (uP) of the computing platforms as the communication counterparts, used for data transfer. Especially, the memory space may comprise one or more of memory windows. Preferably, each window may comprise one or more memory segments. Especially each memory segment may provide a memory of a defined size (of bytes), which may be used to send and/or receive data. Preferably, the memory segments may be mapped to an application space of the different functional applications so that the different functional applications can read and write into these memory segments.

Thus, a memory configuration may be provided. In the automotive context, to enable this shared memory communication, each microprocessor from a (high performance) computing platform may configure and allocate a memory space in the kernel space used for the data transfer. This memory space may be organized in a number of memory windows and each window may contain a number of memory segments. Each memory segment may represent a memory of a fixed size (of bytes). The segments in the memory spaces may then be used to send and receive data. These memory segments may be mapped to the process space of the application software so that the application software may read and write into these segments.

A Peripheral-Component-Interconnect-Express-switch may be configured to implement address translation between memory segments of different computing platforms comprising corresponding address domains. Especially, the Peripheral-Component-Interconnect-Express-switch may use a method for device memory regions to implement address translation. Preferably, the Peripheral-Component-Interconnect-switch may be configured to enable each of the plurality of computing platforms to exchange status in-band with the Peripheral-Component-Interconnect-switch and other nodes, to exchange configuration, data and/or notification.

Furthermore, the Peripheral-Component-Interconnect-Express-switch may be configured to enable each of the plurality of computing platforms to exchange configuration through status in-band with the Peripheral-Component-Interconnect-Express-switch.

Moreover, the Peripheral-Component-Interconnect-Express-switch may be configured to enable each of the plurality of computing platforms to exchange data and/or notification to other nodes through the Peripheral-Component-Interconnect-Express-switch.

Thus, PCIe switch capabilities may be described. The PCIe switch may implement the feature of address translation between the memory segments of different nodes (that is different (high performance) computing platforms), since they are of different address domain. In this case, the switch may use BARs exposed to the nodes to do the memory translation. The PCIe switch may also provide the feature to enable the nodes to exchange status in-band with the switch and other nodes.

As already mentioned above, the system may provide the high-bandwidth interconnect to different structures within the vehicle, being static or heterogeneous and/or being provided with variable computing platforms and/or different functional applications. In the proposed system, the whole configuration of the system may use a static configuration. However, it is possible for the PCIe technology to support hot-plugging features, which may identify and enumerable new nodes during runtime. These dynamics were usually discarded in the automotive context. This is because in the automotive domain, the communication relations as well as the participating nodes are rather static and will not change during the life time of a vehicle. For safety and security reasons, it may also be required that the nodes participating in the communication shall be configured statically before compile time.

APIs of shared memory communication may be configured as described in the following:
In may be provided hat the shared memory interface (SHM-API) is configured to provide:
- Initialization and memory management,
   especially to map/unmap corresponding memory segments into an application space of the different functional applications (APP), so that an application is allowed/denied access to corresponding memory segments.

Thus, Initialization and memory management API may be provided:
o to map/unmap the corresponding memory segments into the process space of the applications so that the application is allowed/denied access of the memory segments

It may be provided that the shared memory interface is configured:
- to provide data transfer,
   especially using:
   Direct Memory Access protocol,
   preferably:
      - to read data from a local memory segment, especially on receiver side,
      - to write data into a local memory segment, especially on sender side, and/or

- Programmed Input/Output protocol,
   preferably:
   - To read data directly from a remote memory segment,
   - To write data directly from a remote memory segment.

For example, when using Direct Memory Access protocol, the shared memory interface may be configured:
- to start a Direct Memory Access transfer,

Preferably, the shared memory interface may be configured to provide a doorbell and/or interrupt action, especially:
- to trigger a doorbell event, i.e., one sender triggers a doorbell event which is generates an interrupt on receiver side, and/or
- to register a callback function for a specific interrupt.

Further, the shared memory interface may be configured to provide different communication protocols, e.g. publish/subscribe protocol.

Advantages of the proposed concept compared to the current solutions may be the following:
The invention proposes a concept of using PCIe for automotive communication using shared memory, like APIs. The proposed solutions use the characteristics of the PCIe communication to address the disadvantages of Ethernet for certain use cases in the communication between (high performance) computing platforms:
It may provide much higher bandwidth compared to Ethernet. For example, a single PCIe lane according to Gen4 standard provides ca. 16 Gbit/s bandwidth. A PCIe link using 4 lanes would provide a 64 Gbit/s bandwidth. This fulfills the bandwidth requirements for automotive use cases where raw data of sensors like camera and LIDAR need to be transferred.

PCIe may provide the possibility of Direct Memory Access (DMA), which uses hardware to transfer data between the memory regions of different nodes. The PCIe switches as well as many microprocessors may easily provide DMA engines for this purpose. This may relieve the CPU from processing the actual transfer of the data and therefore reduce significantly the processing load on the computing units.

PCIe may provide an intrinsic shared memory, like APIs, and application software which usually use a shared memory paradigm to communicate to other software modules that can directly use the shared memory also for in-vehicle communication, without converting them into services and using comparatively more heavy-weight implementation of ara::com or similar implementations.

Compared with existing applications of PCIe communication in other domains, the concept and concept proposed have the following advantages addressing the automotive domain requirements:
The usage of PCIe switch and RC-RC setup makes the solution scalable and also fault tolerant.

Layered software architecture enables the deployment of the software stack and uniform API in a system of heterogeneous high computing platforms.

Offers uniform APIs towards the applications may be provided.

The usage of static configuration may address the automotive specific aspects like performance, safety, security and communication modelling and configuration.

According to the second aspect, it is provided:
A vehicle comprising a system, which may be configured as described above, for a high-bandwidth interconnect, especially a Peripheral-Component-Interconnect-Express-Communication, in an in-vehicle central computing platform as part of the vehicle, comprising a plurality of computing platforms for different functional applications using a shared memory interface.

Embodiments of the invention and its further developments as well as its advantages will be explained in more detail below using figures. The figures show schematically:
Fig. 1 schematic representation of a system architecture,
Fig. 2 required memory segment for both DMA and PIO data transfer,
Fig. 3 a state machine for both PIO and DMA transfer,
Fig. 4 a state machine for a sender state SS and a receiver state RS,
Fig. 5 an example of comparison between different priority schemes,
Fig. 6 an overview of possible data transfer types.

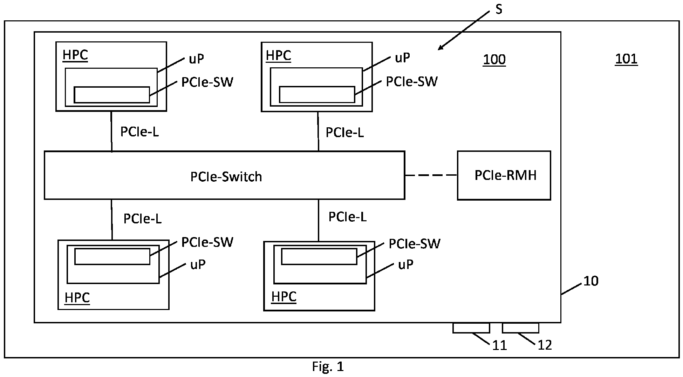

Fig. 1 to 6 serve for explaining of an inventive idea.

A proposed system S is schematically shown in Fig. 1. The proposed system S is configured for a high-bandwidth interconnect PCIe, especially a Peripheral-Component-Interconnect-Express-Communication, in a vehicle 101.

As Fig. 1 illustrates, the vehicle 101 may contain an in-vehicle central computing platform 100, which may comprise a plurality of computing platforms HPC for different functional applications APP.

With the help of the proposed system S, different functional applications APP may use a shared memory interface API, e. g. a shared memory application programming interface (which also may be shortly called as API).

The proposed system S may preferably comprise a modular/layered software architecture SA with different abstraction layers L1, L2, L3, especially being applicable to heterogeneous vehicle equipment with variable computing platforms HPC and/or different functional applications APP.

According to the invention, the system S is configured to fulfill automotive requirements a, b, c, d with regard to:
(a) data consistency during read and write processes during data transfer,
(b) safe operation of the vehicle by guaranteeing the communication bandwidth to safety-related and/or time-critical functional applications (APP),
(c) synchronization between the functional applications (APP) regarding the data transfer,
(d) safe communication by providing organized and/or correct data transfer between the safety-related functional applications (APP), and/or
(e) flexible and efficient communication by providing non-blocking and/or asynchronous data transfer to the functional applications (APP).

A high-bandwidth interconnect PCIe, like a Peripheral-Component-Interconnect-Express-Communication or shortly PCIe, may be used as a communication technology in the more recent centralized E/E architecture comprising multiple high performance computing platforms HPC. In this case, multiple high-performance computing platforms HPC may be integrated in corresponding physical casings, providing the possibility of connecting these high performance computers through a central PCIe switch, preferably without physical cables. The Fig. 1 shows an overview of such a system S.

In such a system S, each high performance computing platforms HPC can have one or more microprocessors as communication nodes in a PCIe network. These microprocessors of each high-performance computing platform may have a PCIe software stack and be configured as a root complex. The PCIe switch may enable the communication between the nodes using address mapping and translation.

Towards the applications, a shared-memory like API can be provided and Direct Memory Access DMA mechanism and/or Programmed Input/Output PIO transfer types may be offered.

Automotive requirements and additional features will be described in the following.

The usage of e. g. bare-metal shared memory, like communication based on PCIe technology, serves as the foundation of applying the PCIe in the automotive domain. However, automotive domains have certain domain specific requirements for communication and additional mechanisms needs to be added to address these requirements. These mechanisms must on one hand fulfill the automotive requirements. On the other hand, they must be designed according to the characteristics of the PCIe technology.

In general, the following requirements may be addressed by the proposed system:
(related to a) Data consistency read/write protection: to enable or even to guarantee data consistency during read/write processes. That is to enable or even to guarantee that the read and write does not happen simultaneously to corrupt the data consistency.
(related to b) Quality-of-Service QoS and performance: to provide mechanisms to offer Quality-of-Service and optimize performance. Firstly, traffics that are data transfers may be prioritized and more important traffics may get access to the bandwidth first. Secondly, the maximal block size may be introduced to limit the time of a single payload. Addition, a sliding window based bandwidth limitation may be introduced to prevent an application to monopolize the bandwidth either through fault or unsound design and starve the other traffics.
(related to c) Notification to receivers: to make it possible so that the receiver can get notified, when a data transfer happens and able to handle the interrupt. Due to performance reasons, the application may be configured to handle the interrupt in different possibilities. A sequence counter (SQC) may also be used as an mechanism for status update without interrupt.
(related to d) An end-to-end E2E mechanism.
(related to e) Buffering mechanisms: to store transferred data into containers like a circular buffer or a FIFO queue so that the receiver may have the opportunity to access older data and does not always have to process the incoming data right away, especially if no data lost/override is tolerated. In addition, the buffering mechanisms may also provide the blocking free data transfer, if the size of the buffer is sufficient.

Data consistency (a) may be achieved by mechanisms as described in the following:
To guarantee the data consistency and protect the read/write operations, a state machine for each data transfer based on memory segments may be provided. In this case, both transfer types Direct Memory Access DMA mechanism and/or Programmed Input/Output PIO may be used.

PIO transfer: In the case of PIO transfer, only a physical memory segment is allocated on the receiver side (here e. g. uP2, uP3, ...). The sender side (here e. g. uP1) has a remote memory segment, which is a virtual memory address referring to the physical memory segment on the receiver side (uP2 and/or uP3 and so on). When the sender writes, it uses the PCIe protocol to directly write into the physical memory segment on the receiver side. The receiver then reads from the same physical memory segment to get the data.

DMA transfer: In the case of DMA transfer, a physical memory segment is allocated on the sender side (here e. g. uP1) to store the data locally, where the sender application can write the data into. Another physical memory segment is allocated on the receiver side (here e. g. uP2, uP3, ...) to store the data, where the receiver application can read data from. The sender application can then trigger a DMA transfer using the DMA engine (especially implemented on the PCIe-Switch) on the PCIe switch to transfer data from the memory segment on the sender side to the receiver side.

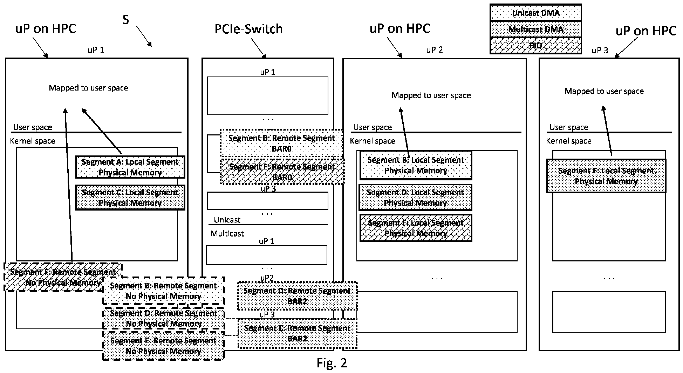

The Fig. 2 shows the required memory segment for both DMA and PIO data transfer.

Therefore, in order to enable the data consistency a state machine is provided to protect data on the memory segments during read and write processes in parallel or simultaneously. It is possible to use Direct Memory Access DMA mechanism and/or Programmed Input/Output PIO mechanism for the data transfer. Preferably for each memory segment used for the data transfer, a state machine may be provided.

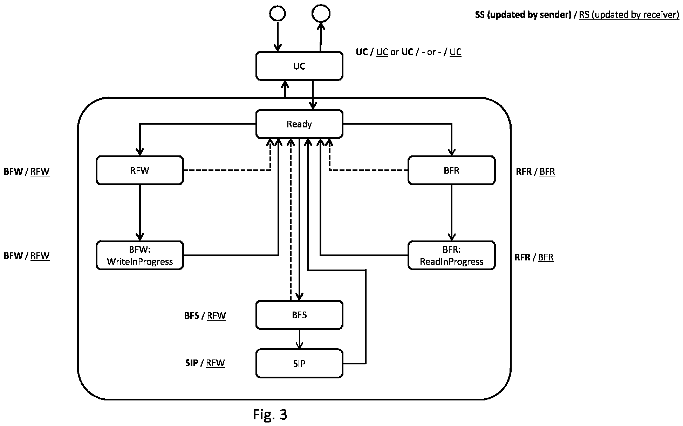

The Fig. 3 shows the uniform segment state machine for both PIO and DMA transfer. The uniform state machine may reduce the complexity by differentiating between the PIO and DMA. For the DMA transfer, a more flexibly state machine may be applied. However, in order to reduce the complexity and offer the easier usage, a uniform state machine may be used for both PIO and DMA.

In order to realize / to implement the state machine, for each memory segment used for the data transfer following logical states may be provided:
- Unconnected UC,
- ReadyForWrite RFW,
- ReadyForRead RFR,
- BlockedForWrite BFW, especially incl. substate WritelnProgress,
- BlockedForRead BFR, especially incl. substate ReadInProgress,
- BlockedForSync BFS, especially for Direct Memory Access DMA, and/or
- SyncInProgress SIP, especially for Direct Memory Access DMA.

Preferably, a state machine may be provided for a sender state SS and a receiver state RS separately.

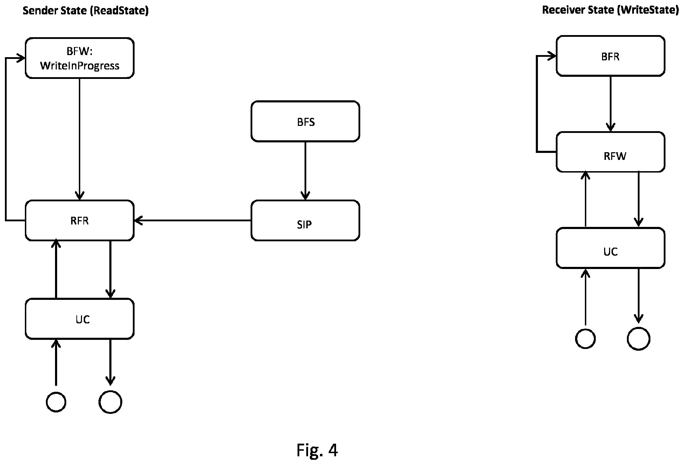

In order to be able to implement the state machine, additionally, a sender state SS and a receiver state RS may be defined, which may take one of the defined of the logical states. A possible mapping of the sender state SS, receiver state RS and logical state are schematically shown in Fig. 4. The state machine for the sender state SS may be updated by the sender side exclusively. The state machine for the receiver state RS may be updated by the receiver side exclusively.

Safe operation of the vehicle 100 may be achieved by mechanisms as described in the following:
The data transfer through PCIe switch may be constrained by the following facts:
- The data transfer between different root complexes may be done by the DMA engine of the PCIe switch.
- Each PCIe switch may have a limited number of DMA channels available, which need to be shared between all the root complexes and end points.

To ensure the quality-of-service QoS of the communication, following requirements may be considered:
- Data transfer with time criticality may be prioritized against other non-time critical ones.
- It shall be prevented that a single data transfer or an application may monopolize the bandwidth and therefore starve the other traffics. This may be especially important, when dynamic transfer of the data is spontaneously triggered from the applications and not cyclically triggered by the PCIe software stack.

Towards these requirements, preferable mechanisms may be added, such as limitation of the block size, sliding window limitation and prioritization of data traffic.

It is possible, that to enable the safe operation (b) of the vehicle 100 a prioritization of data transfer may be provided in order to enable safety-related and/or time-critical functional applications APP to be prioritized against other applications APP.

Prioritization of data traffic may be achieved as described in the following:
To implement the prioritization, each data transfer may be assigned a traffic priority. There may be two locations, where this priority is checked. Firstly, inside the PCIe stack of a node, e. g. triggered DMAs are placed into multiple queues according to the priority. The PCIe stack may empty the queues according to the priority and register the DMA transfer request to the PCIe switch. Secondly, the PCIe switch may go through the registered DMA transfer requests from different nodes and first serve the ones with the highest priority.

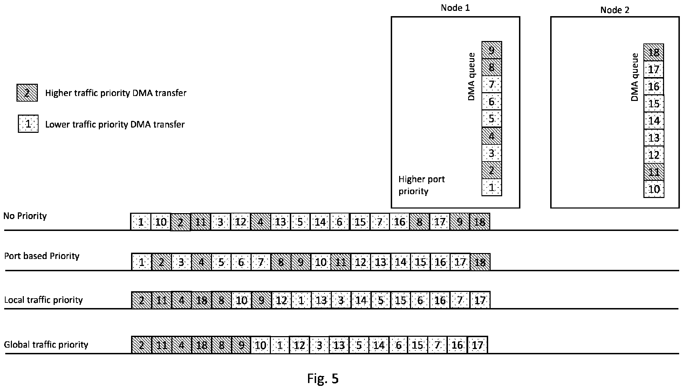

The Fig. 5 shows an example of comparison between different priority schemes where both node 1 and node 2 have a queue of DMA transfer to send.

According Fig. 5 following priority mechanisms may be provided:
- No priority: round-robin scheduling between the Node 1 and Node 2. Both nodes may be a microprocessor of a computing platform HPC.
- Port based Priority: only port priority used (Node 1 port higher priority than Node 2).
- Local traffic Priority: Each node has its own priority (round-robin scheduling between Node 1 and Node 2, no port priority).
- Global traffic Priority: no priority used, all nodes shares same priorities.

It is possible, that to enable the safe operation (b) of the vehicle 100 a limitation of block sizes for data amount of one payload may be provided.

Limitation of block size may be achieved as described in the following:
Since a DMA transfer is not preemptable, i.e., when a DMA transfer has started, it needs to be finished before the DMA engine is free to serve other data transfers, even those with higher priorities. Therefore, it may happen that the DMA transfer with higher priority is still delayed by the time of a DMA transfer. Although the PCIe has a much larger bandwidth compared to other communication technologies, it may also serve the transfer of a much larger data block size in one DMA transfer. Therefore, in order to limit the size of a single DMA transfer, a limitation of a block size may be introduced. The transfer time also depends on the link speed of the PCIe links, which can be different inside the route of a single DMA transfer. Therefore, the block size limit may be calculated according to the links with the lowest speed in the route. The block size limitation may be particularly useful for scenarios, where data streams only tolerate low latency and cannot be delayed by other traffics for too long.

It is possible, that to enable the safe operation (b) of the vehicle 100 a sliding window limitation for accumulated data amount for the DMA transfer is provided,

Sliding window limitation may be achieved as described in the following:
The prioritization and limitation of block size may ensure that the data transfer may be categorized and prioritized and higher priority traffic may always first get a channel. It may, however, not prevent the application to monopolize the bandwidth and thus starving the other traffics, especially for the higher priority traffics. Since triggering of the transfer is left to the application, the application may then decide, when and in which frequency the data transfer will be triggered. A possible cause for the monopolization may be two folds. Firstly, it may be due to an unreasonable design, that the application triggers DMA transfer of large data more frequently than actually needed and too frequent to increase the system last and negatively influence other traffics. Secondly, a fault may occur that turns the application into a babbling idiot and triggers DMA transfer of large data all the time.

To prevent this from happening, a sliding window limitation may be preferable. For each data transfer, two parameters may be configured, a time window and an accumulated size of data that is allowed to be transferred. Each time, an application triggers a DMA transfer, the start and the end of the time window and the accumulated data sent within this window may be calculated. If the limit is not reached, the DMA may be triggered/queued for trigger. If the limit has been reached, then the transfer needs to be prevented. The handling of this prevention may have multiple options depending on actual requirements of the application. One possible option may be, the transfer may be rejected and the application may get an error code back, e. g. together with the next available time, when the DMA can be triggered.

This mechanism may further be applied to the doorbell interrupts, which may be sent from one node to another. The number of instances of the doorbell triggered may be accumulated inside a sliding window and when the limit has reached, no further doorbells instances may be triggered within the sliding window. A further advantage of the sliding window limitation may be that in the worst-case load of the specific data transfer may be calculated offline and therefore firstly may be used for the communication design and secondly may be documented for the system integration. This limitation to prevent the worst case may be important in the automotive E/E systems.

Notification to the receivers may be provided as a further mechanism to achieve the synchronization between the functional applications regarding the data transfer.

Further, in order to enable the synchronization (c) a doorbell mechanism may be provided to enable a doorbell and/or interrupt action.

Unlike conventional bus systems, like Ethernet and CAN, where the software can be configured that the reception of each individual packet can generate an interrupt - the PCIe based data transfer does not necessarily generate an interrupt, when the transfer is done. That may be also an advantage, since it may reduce then interrupt load when it is not necessary.

However, in certain cases, a notification (both in a synchronous and a synchronous fashion) may be needed on the receiver side. For this, the following options may be included:
- Sequence counter, and/or
- Doorbell event either for polling or direct callback function.

In the case of a sequence counter, a running counter may be added to a payload of a data transfer and on the receiver side, no interrupt should be generated, when the data transfer has completed and the receiver may then judge the update status of the data by reading the sequence counter asynchronously. This option may provide reduced processing load.

A doorbell mechanism may be implemented based on MSI interrupts. The sender may ring a doorbell by triggering an event and this event may generate an interrupt on the receiver side. For this mechanism, further two sub-options may be possible. In the first case, in the generated interrupt, only the doorbell semantics may be saved and no further actions follow. The application may either get the list of doorbells through cyclic polling or asynchronous read. In the second case, a user defined callback function may be coupled to the doorbell so that when the doorbell event is triggered, a callback function on the receiver side may be triggered, which may contain the user specific data for further processing.

Following profiles may be provided:
To enable the synchronization (related to c) between the functional applications (APP) regarding the data transfer and/or safe communication (related to d) a sequence counter SQC and/or an end-to-end E2E mechanism may be provided, wherein e. g. the end-to-end E2E mechanism may contain a sequence counter SQC and a cyclic redundancy check CRC.

Thus, profiles, e. g. a number of bytes added to the payload, which is related to or calculated based on the payload, may be used. Two options may be offered, one is a sequence counter SQC and second is an end-to-end E2E profile, which may contain a sequence counter SQC and a cyclic redundancy check CRC.

The sequence counter SQC may be a running counter, which may be incremented on the sender side, e. g. when a new data transfer has happened. This may be checked on the receiver side for the following purposes:
- Indicate an update of the data, and/or
- Protect against the loss, insertion and in correct ordering of data.

The end-to-end E2E profile may further contain a cyclic redundancy check CRC and the possibility of involving a data ID, which may respectively protect against corruption of data and incorrect addressing of data. The end-to-end (E2E) profile may be used to guarantee safe communication by providing organized and/or correct data transfer between the safety-related functional applications (APP). In the case of communication faults, the end-to-end profile and the corresponding mechanism is able to detect these faults and indicate them to the functional applications (APP).

Furthermore, it is possible, that in order to enable the flexible and efficient communication by providing non-blocking and/or asynchronous data transfer to the functional applications (APP), a buffering mechanism may be provided in order to enable reading and/or writing during block states of a sender state SS and/or a receiver state RS.

Buffering mechanisms may be achieved as described in the following:
A buffering mechanism or container may be introduced to enable the possibility of using a circular buffer or a FIFO queue, e. g. containing multiple elements/chunks, wherein especially each element/chunk may represent an instance of data transfer. This buffering mechanism may address the following use cases and requirements:
Data cannot be processed by the receiver immediately after data transfer. This can be due to the processing jitter on the receive side, e.g. from scheduling, so that in order not to lose any data, a container of a specific size as circular buffer or FIFO queue may be implemented to store the data. The sender may then write into the container and the receiver may read out the data from the container. Depending on the size of the container, this may largely decouple the timing of the processing on the receiver side from the timing of data transfer on the sender side.

The application needs several instances of the data. In this case, the application may still get access to data of previous instances.

Block-free data transfer is needed. To guarantee the data consistency during the remote read/write operations, a segment state machine may be implemented. When the state machine blocks the segment for reading, then it is not possible to write into it. With the introduction of the container mechanism, the segment state machine only applies to each individual element called as a chunk of the container. When a chunk is currently blocked for reading, the sender may still write into the next chunk. In the case that the number of chunks in the container is sufficiently large, the block-free data transfer may be achieved, even when data consistency is guaranteed.

Preferably, in order to implement a state machine and/or a buffering mechanism, a synchronization segment control mechanism may be provided.

A synchronization segment control mechanism may be achieved as described in the following:
In order to implement the segment state machine and the buffering mechanisms, an additional concept may be introduced, which is the synchronization memory segment. The synchronization memory segment, similar to the memory segments, may be used to transfer actual payload data, may be a part of memory, that may be accessed both from the sender and receiver side. The synchronization memory segment may use the PIO transfer type. The sender may update remotely and the receiver may update locally inside the synchronization memory segment. The synchronization memory segment may contain a specific data structure that implements both the segment state machine and the pointers for the chunk management for the buffering/container mechanisms.

Preferably, it may be provided that for different types 1, 2, 3, 4 of data appropriate requirements a, b, c, d are defined to be fulfilled.

Data transfer types and feature configurations will be described in the following:
All the additional features described in this may be freely combined to tailor communication for individual use cases.

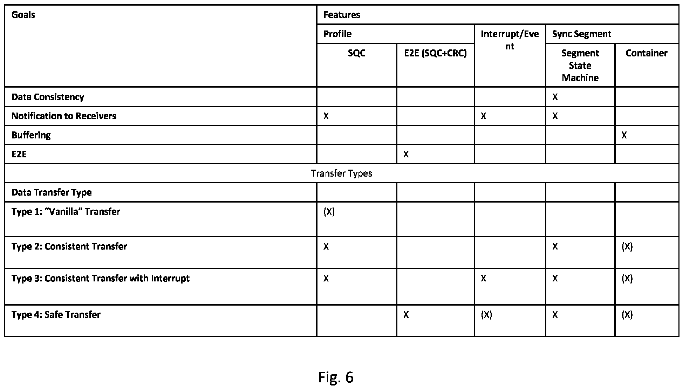

However, the following data transfer types (Type 1 to Type 4) may be defined to group the features together for typical automotive communication use cases. The Fig. 6 shows an overview of the data transfer types with the help of a table.

### Type 1:

Type 1 transfer is a simple "Vanilla" transfer which does not contain any mandatory features. Optionally an SQC may be attached to the payload data to indicate an update of the data to the receivers. The type 1 transfer has the minimal overhead and meanwhile does not offer any protection or additional features. These types of transfer are suited for data transfer, which are unimportant (compared to other data), infrequent and small data, typically data in the non-safety critical functional domains.

### Type 2

Type 2 transfer is a transfer guaranteeing the consistency of the data transfer. In order to do that, the SQC and segment state machine is mandatory. The SQC provides low overhead indications to the receiving applications regarding the update of the data and protect against the loss and incorrect ordering of the data transfer instances. The segment state machine ensures the data consistency during the read/write operations. The type 2 transfer requires extra synchronization memory segments to guarantee data consistency, a trailer part to hold the SQC and the function to maintain and check the SQC. It is targeted at data that are important from a functional point of view (but not safety-critical), needs to be transferred frequently and the data amount to be transferred is comparatively larger. The receiver applications periodical pipelines to process the data, without any particular applicational logic having to actively wait for the data. Typical examples are, e.g., transfer of sensor data e.g., camera raw images used in non-safety critical functions or the gathering of data for backend usages.

### Type 3

Type 3 transfer, compared to the type 2 transfer, has an additional feature of interrupt. That is, whenever a data has been received, the application gets an interrupt from the communication stack, in order to carry out a functional logic that depends on the data. The type 3 transfer requires the interrupt to the applications (which also require additional CPU load and context switches) compared to the type 3 transfer. It is targeted at use cases which are similar to the type 2 transfer, but additionally requires the in-time processing of the data. This transfer type shall be used only when needed, in order to reduce the overall performance load.

### Type 4

Type 4 transfer is a transfer targeted at safety-critical data, i.e., data which are used for ASIL relevant function chains. It requires an E2E profile, which contains the SQC, DatalD and CRC functionality, thus protecting the data transfer against the repetition of data, loss of data, insertion of data, incorrect addressing of data, incorrect sequence of data, corruption of data, fulfilling the automotive requirements for ASIL compliant data transfer.

The type 4 transfer requires an additional trailer part of the payload to hold the E2E profile and the functionality to calculate and check the E2E profile. The calculation of CRC on large data (where currently only PCIe technology is suited for transmission) may require computational resources. The type 4 transfer does not require a mandatory configuration of the interrupt, but this may be added if required.

It is targeted at safety critical data, especially the data which are involved in the function chains of vehicle control (e.g., braking and steering), communication of ADAS internal communication (e.g., distribution of sensor data or environment models) which are used in ASIL relevant function chains.

Use case based customizations may be as described in the following.

The definition of the data transfer types (1 - 4) cover the most significant data transfer use cases in the automotive domain and may serve as development example to configure the data communication using PCIe. This is not a strict restriction of the combination of features and it is free to build customized combinations of the features that is most suited for desired use cases.

The modular/layered software architecture SA (which also may be called a software stack) may be divided into the following layers:
The proposed system S may comprise:
- a first abstraction layer L1 for the high-bandwidth interconnect PCIe for an operation system OS of the microprocessors (uP) of the computing platforms (HPC).

OS / Base Layer (L1): The OS ("Operating System") and base layer may contain the PCIe controller drivers in the BSP provided by the SoC ("System On Chip") vendor and the PCIe OS drivers provided by the OS vendor. These drivers may provide the basic PCIe functionality according to the PCIe standards and the enumeration of the devices.

The proposed system S may comprise:
- a second abstraction layer L2 for managing the high-bandwidth interconnect PCIe.

PCIe Stack Drivers (L2): These drivers may contain the drivers from the PCIe switch vendor for functionalities like DMA and NTB ("Non Transparent Bridge"). The PCIe switch drivers may provide the functionality of interfacing with the PCIe switch incl. e.g., the DMA engine control, the address mapping for the address translation and the status exchange between the node and switch and other nodes. These drivers also may contain the drivers to allocate and configure the physical memories used for communication.

The proposed system S may comprise:
- a third abstraction layer L3 for the shared memory interface API for the different functional applications APP, especially to gain access to the shared memory, preferably provided by the plurality of computing platforms HPC.

Abstraction and APIs L3: This layer may contain runtime daemon for segment and resource management (applications APP may thus directly write into and read from physical segments and not through the runtime daemon). It may also contain necessary libraries and the APIs towards the applications.

The system S enables to apply PCIe communication as a high-bandwidth interconnect solution based on PCIe switches for data communication between (especially high performance) computing platforms HPC in the automotive domain (e. g. for in-vehicle communication). Proposed modular software architecture SA may be preferably applied to heterogeneous computing platforms using shared memory like API ("Application Programming Interface"), preferably including corresponding mechanisms, software architecture and the interfaces.

The proposed system S enables a generic automotive application to use PCIe communication using shared memory like communication paradigm by abstracting the PCIe specific details. This may be achieved by using a software stack with modular/layered software architecture and providing a shared memory like API towards the applications.

The proposed system S is not focusing on a particular scenario or function within the vehicle and not require PCIe specific implementation in the applications.

Advantageously, the proposed system S enables the technology to be rolled out on a generic automotive application for different functional domains.

Preferably, the proposed system S abstracts the PCIe related details from the applications APP. Application developers do not need to concern with the PCIe details. The details are addressed by a configurable PCIe software stack (i.e. by the stack functionalities and its configurations).

Advantageously, the proposed system S provide shared memory based (and thus scalable) communication, e.g. using the DMA ("Direct Memory Access") and/or PIO ("Programmed Input/Output") mechanism.

Advantageously, the proposed system S may abstract the details of the HW/OS/SW framework of the microprocessors of the computing platforms and PCIe switches.

Additionally, utilizing the concept for abstraction, applications APP may be abstracted from the fact that memory is shared between applications APP either via local shared memory (i.e. RAM accessible by the CPU of one compute note) or remotely via PCIe Switch. The proposed system may automatically choose (either through static configuration or dynamic decision) according to an addressing scheme (specifying communication relationship and the deployment of the applications) one of the following transfer method:
∘ Local shared memory segment or equivalent mechanisms (including signaling of data availability for read or write via semaphore as doorbell replacement).
∘ Memory segment on source compute node mirrored to memory segment on target compute node(s) (including doorbell signaling) through DMA via either.
   □ PCIe switch direct DMA for RC-RC connections (incl. scatter/gather DMA when possible).
   □ PCIe switch multicast DMA.
   □ Compute node DMA for RC-EP connections (incl. scatter/gather DMA when possible).
∘ Memory segment read or written through PIO mechanism (including doorbell signaling).
∘ Transfer of data via alternative Ethernet connection, whereby the "shared memory" characteristics is emulated on top of the IP protocol stack, i.e. keeping the "shared memory" abstraction towards the application.

Dividing the software into different layers L1, L2, L3 enables the abstraction of the specifics of the HW, OS and PCIe switch, so that the stack can be used for a uniform solution for different HW, OS (e.g., Linux or QNX) as well as the PCIe switch. Towards the applications the same API is used. This enables efficient and compatible communication between the high-performance computing platforms such as computing platforms HPC customized to different automotive functional domains.

With the help of the proposed system S a plurality of advantages may be achieved.
(a) The proposed system S may use a PCIe switch for the PCIe communication, making the solution scalable to multiple (high performance) computing platforms HPC.
(b) The proposed system S provides a modular software architecture SA for the PCIe stack on the (high performance) computing platforms HPC which applies to heterogeneous (HW and OS) computing platforms.
(c) The proposed system S provides higher level protocols and APIs enabling automotive applications to use the remote shared memory communication.

PCIe communication and application in distributed automotive E/E systems may comprise:
A centralized (high performance) platform architecture, which may be implemented as described in the following:
As Fig. 1 shows each of the plurality of computing platforms HPC may be integrated in an in-vehicle central computing platform 100 with corresponding casing 10, especially comprising a power supply 11 and a cooling system 12.

The Fig. 1 shows an example of a centralized system S architecture in the automotive domain, where (high performance) computing platforms HPC like single computing platforms HPC may be integrated in a physical casing 10 with power supply 11 and cooling system 12. Such an architecture enables the usages of PCIe as communication technology since the (high performance) computing platforms HPC may be connected with the PCIe switch, especially without a cable connection.

Each of the plurality of computing platforms HPC may comprise at least one or more microcontroller and/or microprocessor systems to host one or more functional applications APP, especially:
- advanced driver assistance systems ADAS,
- infotainment functions,
- driving and charging functions,
- connectivity functions, etc.

The whole system S comprise multiple (high performance) computing platforms HPC, each of which may comprise multiple microcontroller and microprocessor systems. Each of these (high performance) computing platforms HPC may be used to host software functions of specific domains, like ADAS ("Advanced Driver Assistance Systems"), Infotainment, driving and charging functions, connectivity, etc.

As Fig. 1 shows, one or more microprocessors uP of each of the plurality of computing platforms HPC may comprise a software stack/layer PCIe-SW for the high-bandwidth interconnect PCIe. The PCIe communication may be primarily targeted at the communication between the computing platforms HPC. On each computing platform HPC using the PCIe communication, a PCIe software stack/layer PCIe-SW may be integrated.

As Fig. 1 shows, a Peripheral-Component-Interconnect-Express-switch PCIe-Switch may be provided for the high-bandwidth interconnect PCIe, especially comprising a firmware with a switch configuration.

As Fig. 1 shows, a remote management host PCIe-RMH, preferably in the form of a microcontroller, may be provided, especially comprising a firmware to run management tasks for a Peripheral-Component-Interconnect-Express-switch PCIe-Switch.

As Fig. 1 shows, each of the plurality of computing platforms HPC may be connected to a Peripheral-Component-Interconnect-Express-switch PCIe-Switch using a Peripheral-Component-Interconnect-Express-link PCIe-L, especially comprising one or more Peripheral-Component-Interconnect-Express-lanes, preferably 1, 2, 4 etc. which may be chosen depending on the bandwidth need.

Preferably, the high-bandwidth interconnect PCIe may be configured to be used parallel to an Ethernet based communication in the vehicle 100, especially to serve for such functional applications APP which require increased bandwidth, reduced latency and/or hardware-based data transfer with reduced interrupt and processing load. The PCIe communication does not need to replace the Ethernet-based backbone communication. It may be parallel to the Ethernet communication to serve for specific use cases requiring large bandwidth, low latency and/or hardware based data transfer with reduced interrupt and processing load.

Potential target use cases may be provided as described in the following:
Potential use cases for the PCIe communication may be divided into the following categories:
- Data transfer with increased/large bandwidth:

Typical examples of this use case may be transfer of raw sensor data, e.g. camera images, from one (high performance) computing platform HPC to another, optionally also in a multicast fashion. The bandwidth requirement for each individual use case may easily go up to two-digit Gbit/s range and would be too much for the Ethernet connection both from the communication bandwidth and processing load point of view. The DMA based transfer using PCIe may solve this problem both from the bandwidth due to much larger bandwidth and the processing load (due to HW based data transfer) point of view.
- Data transfer with reduced/low latency:
   PCIe based communication may also enable data transfer that requires low latencies. Due to a large bandwidth and a mature and efficient implementation of the PCIe technology in the lower layer (TLP), the data transfer with PCIe offers also very low latency.
- Data transfer with reduction of interrupt loads:
   PCIe may also provide data transfer with reduced interrupt loads. The DMA transfer using hardware can reduce the number of interrupts generated in the software for the processing of data packets to only those necessary. Therefore, it may also be suited for providing the general availability of data to high performance computing platforms e.g., signals from sensor/actuator layers.

PCIe communication and application in distributed automotive E/E systems may comprise:
A RC-to-RC communication architecture through a PCIe switch, which may be implemented as described in the following:
Preferably, the plurality of computing platforms HPC may be configured to build an RC-to-RC-Architecture for the high-bandwidth interconnect PCIe. Advantageously, each of the plurality of computing platforms HPC may be configured as a root complex node RC within a RC-to-RC-Architecture of the high-bandwidth interconnect PCIe. Further, each of the plurality of computing platforms HPC may comprise a corresponding address domain within a RC-to-RC-Node-Architecture of the high-bandwidth interconnect PCIe.

Generally, a PCIe node may be configured as a Root Complex RC node or an End Point EP node. In the proposed system, each of the (high performance) computing platforms may be preferably configured as RC ("Root Complex") node, e. g. having its own memory address domain, which may be partitioned and isolated. The PCIe switch maps and translates between the different memory address domains thus enabling the communication between different root complexes. The RC-to-RC-Node-Architecture may be advantageously since in this case each (high performance) computing platform HPC may have its own memory address domain. Therefore, a system fault on one node might not lead to the unavailability of the whole system, as compared to a RC-EP system. The abstraction concept in the proposed system can also be applied to a EP node without changes in the API towards the application.

Data transfer using PIO and DMA may be chosen, e.g. as disclosed in the following:
The PCIe communication offers two types of transfer mechanisms.

One is the Direct Memory Access (or shortly DMA) based data transfer, where the DMA engine from the PCIe switch or the (high performance) computing platforms HPC is used to transfer the data from the sender to the receiver and the CPU of the sender and receiver is only used for writing and reading data from its local memory.

The second is Programmable Input/Output (or shortly PIO) based data transfer, where the CPU of the (high performance) computing platforms HPC are directly involved in the data transfer.

In the proposed system S, both mechanisms may be used for the data transfer between the (high performance) computing platforms HPC. The DMA can be used for the transfer of large bandwidth data, like raw sensor data, from the ADAS sensors or the generate providing of the data where interrupt and processing load is minimized.

The PIO may be used for use cases requiring low latency data transfer of smaller (but maybe important) data, like the synchronous exchange of the status information between two (high performance) computing platforms HPC.

Additionally, it is also possible to trigger a doorbell event from one (high performance) computing platform HPC.

Shared memory communication may be provided as described in the following:
The PCIe technology is intrinsically suited for shared memory communication.

The high-bandwidth interconnect may be provided by one or more microprocessors (uP) of each of the plurality of computing platforms HPC being configured to allocate a memory space in a space, e. g. locally on microprocessors (uP) of the computing platforms HPC and/or remotely on the microprocessors (uP) of the computing platforms (HPC) as the communication counterparts, used for data transfer. This memory space may be organized in a number of memory windows. Each window may contain a number of memory segments. Each memory segment may represent a memory of a fixed size (of bytes). The segments in the memory spaces may then be used to send and receive data. These memory segments may be mapped to the application APP space so that the application APP software may read and write into these memory segments.

A Peripheral-Component-Interconnect-Express-switch PCIe-Switch may implement the feature of address translation between the memory segments of different nodes that is different high performance computing platforms HPC, since they are of different address domain. In this case, the switch may use BARs exposed to the nodes to do the memory translation. The PCIe switch may also provide the feature to enable the nodes to exchange status in-band with the switch and other nodes.

As already mentioned above, the whole configuration of the system may use a static configuration. However, it is possible for the PCIe technology to support hot-plugging feature, which may identify and enumerable new nodes during runtime. These dynamics were usually discarded in the automotive context. This is because in the automotive domain, the communication relations as well as the participating nodes are rather static and will not change during the life time of a vehicle. For safety and security reasons, it may also be required that the nodes participating in the communication shall be configured statically before compile time.

APIs of shared memory communication may be configured as described in the following:
It may be provided that the shared memory interface API is configured to provide:
- Initialization and memory management,
   especially to map/unmap corresponding memory segments into an application space of the different functional applications APP, so that an application is allowed/denied access to a memory segment.

Thus, initialization and memory management API may be provided:
o To map/unmap the corresponding memory segments into the process space of the applications so that the application is allowed/denied access of the memory segments

It may be provided that the shared memory interface API is configured to provide:
- data transfer,
   especially using:
   Direct Memory Access DMA protocol,
   preferably:
      - to read data from a local memory segment, especially on receiver side,
      - to write data into a local memory segment, especially on sender side, and/or

   - Programmed Input/Output PIO protocol,
      preferably:
      - To read data directly from a remote memory segment,
      - To write data directly from a remote memory segment.

For example, when using Direct Memory Access DMA protocol, the shared memory interface API may be configured:
- to start a Direct Memory Access DMA transfer,

Preferably, the shared memory interface API may be configured to provide a doorbell and/or interrupt action, especially:
- to trigger a doorbell event, i.e., one sender triggers a doorbell event which generates an interrupt on the receiver side, and/or
- to register a callback function for a specific interrupt.

Further, the shared memory interface API may be configured to provide different communication protocols, e.g. publish/subscribe protocol.

Advantages of the proposed concept compared to the current solutions may be the following:
The invention proposes a concept of using PCIe for automotive communication using shared memory, like APIs. The proposed solutions use the characteristics of the PCIe communication to address the disadvantages of Ethernet for certain use cases in the communication between high performance computing platforms:
It may provide much higher bandwidth compared to Ethernet. For example, a single PCIe lane according to Gen4 standard provides ca. 16 Gbit/s bandwidth. A PCIe link using 4 lanes would provide a 64 Gbit/s bandwidth. This fulfills the bandwidth requirements for automotive use cases where raw data of sensors like camera and LIDAR need to be transferred.

PCIe may provide the possibility of Direct Memory Access DMA, which uses hardware to transfer data between the memory regions of different nodes. The PCIe switches as well as many microprocessors may easily provide DMA engines for this purpose. This may relieve the CPU from processing the actual transfer of the data and therefore reduce significantly the processing load on the computing units.

PCIe may provide an intrinsic shared memory, like APIs, and application software which usually use a shared memory paradigm to communicate to other software modules can directly use the shared memory also for in-vehicle communication, without converting them into services and using comparatively more heavy-weight implementation of ara::com or similar implementations.

Compared with existing applications of PCIe communication in other domains, the concept and concept proposed have the following advantages addressing the automotive domain requirements:
The usage of PCIe switch and RC-RC setup makes the solution scalable and also fault tolerant.

Layered software architecture enables the deployment of the software stack and uniform API in a system of heterogeneous high computing platforms.

Offers uniform APIs towards the applications may be provided.

The usage of static configuration may address the automotive specific aspects like performance, safety, security and communication modelling and configuration.

A corresponding vehicle 100 comprising a respective system S builds another aspect of the present invention.

The above description of the figures describes the present invention only in the context of examples. Of course, individual features of the embodiments may be combined with each other, provided it is technically reasonable, without leaving the scope of the invention.

### Reference signs

- 100: in-vehicle central computing platform

- 101: vehicle

- APP: application

- SHM-API: shared memory interface

- uP: microprocessor

- SA: software architecture

- L1: layer
- L2: layer
- L3: layer

- S: system

- HPC: computing platform

- 10: casing
- 11: power supply
- 12: cooling system

- PCIe-SW: software stack

- PCIe: high-bandwidth interconnect

- PCIe-Switch: Peripheral-Component-Interconnect-Express-switch
- PCIe-RMH: remote management host
- PCIe-L: Peripheral-Component-Interconnect-Express-link
- SS: sender side
- RS: receiver side

## Claims

1. A system (S) for a high-bandwidth interconnect (PCIe), especially a Peripheral-Component-Interconnect-Express-Communication, in an in-vehicle central computing platform (100) as part of a vehicle (101),
the in-vehicle central computing platform comprising a plurality of computing platforms (HPC), optionally high performance computing platform and/or integration computing platform, for different functional applications (APP) using a shared memory interface (SHM-API), especially a shared memory application programming interface,
the system (S) comprising a modular software architecture (SA) with different abstraction layers (L1, L2, L3), especially being applicable to heterogeneous vehicle equipment with variable computing platforms (ECU) and/or different functional applications (APP),
wherein the system (S) is configured to fulfill automotive requirements (a, b, c, d, e) with regard to:
(a) data consistency during read and write processes during data transfer,
(b) safe operation of the vehicle (101) by guaranteeing the communication bandwidth to safety-related and/or time-critical functional applications (APP),
(c) synchronization between the functional applications (APP) regarding the data transfer,
(d) safe communication by providing organized and/or correct data transfer between the safety-related functional applications (APP), and/or
(e) flexible and efficient communication by providing non-blocking and/or asynchronous data transfer to the functional applications (APP).

2. The system (S) according to claim 1,
wherein to enable the data consistency (a) a state machine is provided to protect memory segments during read and write processes in parallel or simultaneously,
and/or wherein for the data transfer Direct Memory Access (DMA) mechanism and/or Programmed Input/Output (PIO) mechanism are provided,
and/or wherein for each memory segment used for the data transfer a state machine is provided,
and/or wherein for each memory segment used for the data transfer following logical states are provided:
- Unconnected (UC),
- ReadyForWrite (RFW),
- ReadyForRead (RFR),
- BlockedForWrite (BFW), especially incl. substate WritelnProgress,
- BlockedForRead (BFR), especially incl. substate ReadInProgress,
- BlockedForSync (BFS), especially for Direct Memory Access (DMA), and/or
- SyncInProgress (SIP), especially for Direct Memory Access (DMA),
and/or wherein a state machine is provided for a sender state (SS) and a receiver state (RS) separately.

3. The system (S) according to claim 1 or 2,
wherein to enable the safe operation (b) of the vehicle (101) a prioritization of data transfer is provided in order to enable safety-related and/or time-critical functional applications (APP) to be prioritized against other applications (APP),
and/or wherein to enable the safe operation (b) of the vehicle (101) a limitation of block sizes for data amount of one payload is provided,
and/or wherein to enable the safe operation (b) of the vehicle (101) a sliding window limitation for accumulated data amount of the data transfer is provided,

4. The system (S) according to one of the preceding claims,
wherein to enable the synchronization (c) between the functional applications (APP) a doorbell mechanism is provided to enable a doorbell and/or interrupt action,
and/or wherein to enable the synchronization (c) between the functional applications (APP) a sequence counter (SQC) is provided,
and/or wherein to enable the stable and safe communication (d) an end-to-end (E2E) mechanism is provided, wherein especially the end-to-end (E2E) mechanism contains a sequence counter (SQC) and a cyclic redundancy check (CRC) and optionally a data (ID).

5. The system (S) according to one of the preceding claims,
wherein to enable the flexible and efficient communication (e), a buffering mechanism is provided in order to enable reading and/or writing during block states of a sender state (SS) and/or a receiver state (RS).

6. The system (S) according to one of the preceding claims,
wherein to implement a state machine and/or a buffering mechanism, a synchronization memory segment and control mechanism is provided.

7. The system (S) according to one of the preceding claims,
wherein for different types (1, 2, 3, 4) of data transfer appropriate combinations of mechanisms fulfilling the automotive requirements (a, b, c, d, e) are defined.

8. The system (S) according to one of the preceding claims,
wherein each of the plurality of computing platforms (HPC) is integrated in an in-vehicle central computing platform (100) with a corresponding casing (10), especially comprising a power supply (11) and a cooling system (12),
and/or wherein each of the plurality of computing platforms (HPC) comprise at least one or more microcontroller and/or microprocessor systems to host one or more functional applications (APP), especially:
- advanced driver assistance systems (ADAS),
- infotainment functions,
- driving and charging functions,
- connectivity functions, etc.

9. The system (S) according to one of the preceding claims,
wherein each of the plurality of computing platforms (HPC) comprise a software stack (PCIe-SW) for the high-bandwidth interconnect (PCIe),
and/or wherein a Peripheral-Component-Interconnect-Express-switch (PCIe-Switch) is provided for the high-bandwidth interconnect (PCIe), especially comprising a firmware with a switch configuration,
and/or wherein a remote management host (PCIe-RMH), preferably in the form of a microcontroller, is provided, especially comprising a firmware to run management tasks for a Peripheral-Component-Interconnect-Express-switch (PCIe-Switch).

10. The system (S) according to one of the preceding claims,
wherein the plurality of computing platforms (HPC) is configured to build an RC-to-RC-Architecture for the high-bandwidth interconnect (PCIe),
and/or wherein each of the plurality of computing platforms (HPC) has microprocessors (uP) configured as a root complex node (RC) within a RC-to-RC-Architecture of the high-bandwidth interconnect (PCIe),
and/or wherein each of the plurality of computing platforms (HPC) comprises a corresponding address domain within a RC-to-RC-Architecture of the high-bandwidth interconnect (PCIe).

11. The system (S) according to one of the preceding claims,
wherein data transfer between the plurality of computing platforms (HPC) is provided using Direct Memory Access (DMA) mechanism and/or Programmed Input/Output (PIO) mechanism.

12. The system (S) according to one of the preceding claims,
wherein the high-bandwidth interconnect is provided by one or more microprocessors (uP) of each of the plurality of computing platforms (HPC) being configured to allocate a memory space in a space, e. g. locally on microprocessors (uP) of the computing platforms (HPC) and/or remotely on the microprocessors (uP) of the computing platforms (HPC) as the communication counterparts, used for data transfer,
wherein especially the memory space comprises one or more of memory windows,
wherein preferably each window comprises one or more memory segments,
wherein especially each memory segment provides a memory of a defined size (of bytes), which may be used to send and/or receive data,
wherein preferably the memory segments are mapped to an application space of the different functional applications (APP) so that the different functional applications (APP) can read and write into these memory segments.

13. The system (S) according to one of the preceding claims,
wherein a Peripheral-Component-Interconnect-Express-switch (PCIe-Switch) is configured to implement address translation between memory segments of microprocessors (uP) of different computing platforms (HPC) comprising corresponding address domains,
wherein especially the Peripheral-Component-Interconnect-Express-switch (PCIe-Switch) uses a method for device memory regions (BAR) to implement address translation, to exchange configuration, data and/or notification,
and/or wherein the Peripheral-Component-Interconnect-Express-switch (PCIe-Switch) is configured to enable each of the plurality of computing platforms (HPC) to exchange configuration through status in-band with the Peripheral-Component-Interconnect-Express-switch (PCIe-Switch),
and/or wherein he Peripheral-Component-Interconnect-Express-switch (PCIe-Switch) is configured to enable each of the plurality of computing platforms (HPC) to exchange data and/or notification to other nodes through the Peripheral-Component-Interconnect-Express-switch (PCIe-Switch),
wherein the system provides the high-bandwidth interconnect (PCIe) to static or heterogeneous vehicle equipment with variable computing platforms (HPC) and/or different functional applications (APP).

14. The system (S) according to one of the preceding claims,
Wherein the shared memory interface (SHM-API) is configured to provide:
- Initialization and memory management,
especially to map/unmap corresponding memory segments into an application space of the different functional applications (APP), so that an application is allowed/denied access to a memory segment,
- provide data transfer,
especially using:
Direct Memory Access (DMA) protocol,
preferably:
- to read data from a local memory segment, especially on receiver side,
- to write data into a local memory segment, especially on senderside, and/or
- Programmed Input/Output (PIO) protocol,
preferably:
- To read data directly from a remote memory segment,
- To write data directly from a remote memory segment.

15. An in-vehicle central computing platform (100) comprising a system (S) according to one of the preceding claims for a high-bandwidth interconnect (PCIe), especially a Peripheral-Component-Interconnect-Express-Communication, in the in-vehicle central computing platform (100) as part of a vehicle (101), comprising a plurality of computing platforms (HPC) for different functional applications (APP) using a shared memory interface (SHM-API).
